# EUROPEAN PATENT SPECIFICATION

(11) **EP 1 056 226 B1**
(45) Date of publication and mention of the grant of the patent: **08.04.2009**
(21) Application number: 00500097.1
(22) Date of filing: 22.05.2000
(51) Int. Cl.: H04B 10/12, H04W 88/08

(54) **Module for radio transmission over optical fibre**
Modul zum Übertragen von Funkdaten über optische Faser
Module pour la transmission de données de radiotéléphonie par fibres optiques

(30) Priority: 26.05.1999 ES 9901130
(43) Date of publication of application: 29.11.2000
(73) Proprietor: Telefonica, S.A., 28013 Madrid (ES)
(72) Inventor: Cucala Garcia, Luis, 28020 Madrid (ES); Galindo Gonzalez, Adolfo, 28020 Madrid (ES); Gil Roa, Manuel, 28020 Madrid (ES); Fillmore, David Ian, 28020 Madrid (ES)
(74) Representative: Sanchez del Campo Gonzalez de Ubierna, Ramon

(56) References cited:
- US-A- 5 339 184
- US-A- 5 400 391
- US-A- 5 838 474
- FYE D M: "DESIGN OF FIBER OPTIC ANTENNA REMOTING LINKS FOR CELLULAR RADIO APPLICATIONS" VEHICULAR TECHNOLOGY CONFERENCE,US,NEW YORK, IEEE, vol. CONF. 40, 6 May 1990 (1990-05-06), pages 622-625, XP000204183

## Description

### BACKGROUND OF THE INVENTION

The present specification refers to a new module for radio transmission over optical fibre, by using a dual band formed by a digital system of wireless telephony in 900 MHz band, more exactly, GSM (Group System Mobile), and a digital system of wireless telephony in 1800 MHz band, exactly, DCS-1800 (Digital Communication System), at 1800 MHz, being about an "optical repeater" allowing the radiofrequency signals of a cellular telephony system in GSM 900/DCS 1800 dual band to be carried to their corresponding microcells, by using an assembly of optical fibres for transmitting signals from and to a Base Station.

### FIELD OF THE INVENTION

This invention will find application in the field of telecommunications, and more specifically, in the field of the cellular telephony, in the covering of shadow zones (tunnels), or in zones having a high level of traffic.

### RELATED ART

On the lines of the imposing growth in the market of the cellular telephony, it is evident the presence of two basic problems affecting the operators. To wit:
- To assure a covering over the largest part of the territory wherein they serve.
- To avoid calls to be interrupted due to a saturation in the radiochannels available.

An acceptable and suitable solution to these problems would be to use repeaters, which can be both electrical (by means of a coaxial cable) and optical.

The applicant is the proprietor of a Patent of Invention applied for and deposited with the Spanish Office of Patents under number 9701387 on date of June 24, 1997, referring to a NEW MODULE FOR RADIO TRANSMISSION OVER OPTICAL FIBRE.

The module covered by said application for the Patent of Invention, had a capacity for two channels in GSM 900 band with more than 0.5 watts each.

In order to solve the present problems existing in this field, it is necessary to use a module having not only a greater capacity but, also, a capacity appropiate to work in DCS-1800 band, and the applicant is not aware of the - existence at present of an invention contemplating a protection of a radio transmission module over optical fibre having characteristics considered as suitable.

### SUMMARY OF THE INVENTION

module for radio transmission over optical fibre as proposed by the invention, configure per se an obvious novelty in its specific field of application, presenting a module for radio transmission over optical fibre having capacity for two channels in GSM 900 band having more than 0.5 watts each, and two channels in DCS 1800 band having more that 0.5 watts each.

In a most definite way, the module for radio transmission over optical fibre of the invention, are constituted starting from a duly designed - equipment accepting the inlet of two channels in GSM frequencies, and other two channels in DCS frequencies, the equipment performing an electrooptical conversion of said channels, spreading until the receiver end.

At the transmitter end of an antenna module an opticoelectric conversion is performed, and each channel is amplified until reaching a power of more than 0.5 watts - each, the four channels being multiplexed in order to - attack the antenna.

At the receiver end, the channel or channels arriving from the antenna, which can belong to any of two bands, i.e. GSM and/or DCS, are converted to optical frequencies and they spread over fibre, being converted again to frequencies RF, i.e. radiofrequencies, to be delivered to the Base Station.

### DESCRIPTION OF DRAWINGS

In order to complement this description and aid to a better understanding of the characteristics of the invention, the appending set of drawings, which are a part of this specification, shows,by way of illustrative and non-limiting example, the following:
Figure 1 corresponds to an optical connection diagram applicable to the invention, in relation to a new module for radio transmission over optical fibre.
Figure 2 shows a block diagram of the so-called BTS module or Base Station Transceiver.
Figure 3 corresponds, lastly, to a block diagram of the module and antenna.

### DETAILED DESCRIPTION OF THE PREFERRED EMBODIMENT

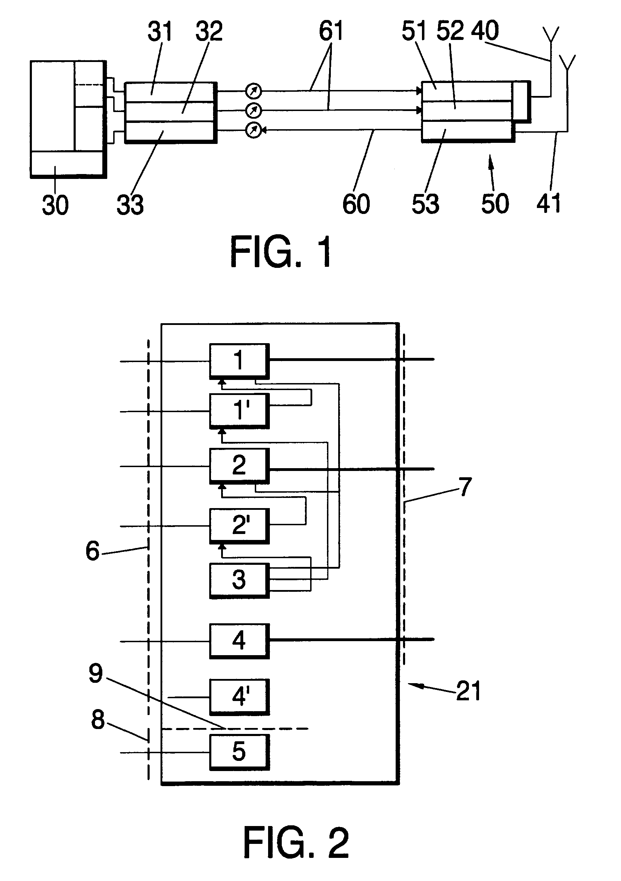

Following figure 1, corresponding to an optical connection diagram, it is noted that the connection is as follows. To wit:
- The optical connection is made between a Base Station BTS (30), and an assembly of two antennas: a transmitting antenna and a receiving antenna, referenced (40) and (41), respectively.
- The optical connection is formed by two network active elements and three fibres of a same cable, the active network elements being a BTS module (30) and an antenna module (50), which are located near the Base Station transceiver or BTS, and the antennas (40) and (41), respectively.
- The BTS module (30) consists of two electrooptical converters (E/O) equal (31) and (32), and an optoelectric converter (O/E) (33), each converter being connected with BTS through a coaxial connector and the cable by means of an optical connector.
- Reciprocally, there are two optoelectric converters (51) and (52) and an electrooptical converter (53) on the antenna module (50), each of the converters being connected each other with the cable through an optical connector.

At the antenna side, nevertheless, the outlet of radiofrequency (RF) of optoelectric converters (51) and (52) is combined in only one outlet connector, which is connected to the transmitter antenna by a single coaxial cable.

The electrooptical converter (53) is connected with the receiving antenna through another coaxial connector.

The coaxial connector with the radiofrequency interface is a coaxial connector typically used in radiofrequency of 50Ω, while the connector with the optical interface is a SC-APC connector configured as a connector typically used in optical fibre.

The conventional reference of the coaxial connector typically used in radiofrequency is "N".
- Owing to the fact that the propagation losses in optical fibre are very low (< 0.5 dB/km), this system allows the BTS or base station transceiver (30) of antennas (40) and (41) to separate several kilometers.
- Following the terminology of celular systems, ascending link is the link going in receiving antenna sense to the base station referenced (60) in the figure, while the so-called descending links are the links going from the base station to the transmitter antenna, referenced (61).

The operating principle of the invention is as follows:

Both the BTS module (30) and the antenna module (50) present a radiofrequency interface and another optical interface, being connected as follows: radiofrequency interface of BTS module (30) to radiofrequency interface of a base station of cellular systems, while radiofraquency interface of the antenna module (50) to an antenna (41), and optical interfaces of BTS module (30) and of antenna module, each other, through the above mentioned assembly of three optical fibres.

In the sense of cellular base station-antenna module, the two channels in GSM band or digital system of wireless telephony in 900 MHz band, proceeding from the cellular base station, module, as for intensity, a laser emitter, and the optical signal so generated travels over an optical fibre up to the antenna module (50), where it is converted to radiofrequency signals by means of a photodiode, said signals being later amplified and combined to attack the radiofrequency interface of the antenna module.

In the sense of cellular base station to antenna module, the two channels in GSM and/or DCS-188 band, proceeding from the cellular base station, modulate, as to insentity, a laser emitter, the optical signal so generated travelling over an optical fibre up to the antenna module (50), where it is converted to radiofrequency signals by means of a photodiode, said signals being later amplified and combined to attack the radiofrequency interface of the antenna module.

In the sense of antenna module to cellular base station, the channels GSM and/or DCS-188, received in the radioelectrical interface of the antenna module, are amplified and they modulate as to intensity a high power laser emitter.

The optical signal so formed travels over an optical fibre until the BTS module, where it is converted to raqiofrequency channels by means of a photodiode and said signals are later amplified, attacking the radioelectrical interface of the BTS module (30).

There is, on the antenna module, a control interface receiving, on the one hand, a series of alarms, and on the other hand, it generates a signal which modulates as to intensity the laser located at the antenna module. In this way, the alarm information generated in the antenna module is sent to the BTS module to be later processed.

On the other hand, a control interface located at the BTS module, receives the diverse alarms, performs a series of commands and communicates with with a third module, so-called supervision and control module.

The supervision and control module is physically housed in the same frame where the BTS module or modules will be located, there being an only supervision and control module all over the plant.

The supervision and control module receives the alarms from the BTS modules, sends them the corresponding commands and communicates with a remote modem via a GSM channel.

Following figure 2, it shows a block diagram of the so-called BRS module (30), wherein, to be exact, on the left part thereof, the radiofrequency interface (6) is situated, which is connected to a base station of cellular systems.

A GSM channel, proceeding from same, attacks an electrooptical converter (1), and a second GSM channel attacks a frequency converter (1'), which reduces the channel frequency by means of an intermediate frequency signal proceeding from a PLL synthesizer (Phase Locked Loop)

The channel so reduced as for frequency, is carried to the electrooptical converter (1), and the two channels attack the transmitter laser, Fabry-Perot type, which is configured as a kind of laser transmitter characterized in that it simultaneously emits in several wave lengths or modes, which are different, without cooling, generating an optical signal containing information of the two radiofrequency carriers, said signal being present at the optical interface (7).

In an analogous way, a DCS channel proceeding from the base station of celular systems, attacks the electrooptical converter (2), and a second DCS channel is applied to the frequency converter module (2'), which lowers the frequency thereof by means of a local oscillator proceeding from the PLL synthesizer (3) or phase locked loop, carrying the outlet signal to the electrooptical converter (2).

The two channels, that is to say, the DCS frequency channel and that displaced downwards, attack a transmitter laser, type Fabry-Perot, with no cooling, and an optical signal containing information from the two radiofrequency carriers is generates, said signal being present on the optical interface (7).

On the other hand, the optical signal coming from the antenna module containing information from one or several GSM and/or DCS channels, arrives through the optical interface (7) to the ascending opticoelectric converter (4), and it is here where the separation is performed, on the one hand, of the GSM carriers going to the radioelectric interface (6), and on the other hand, the DCS carriers, which, after being amplified and filtered at (4'), attack the radioelectric interface (6).

Said optical signal contains, also, alarm information from the antenna module, and said information, shaped like a FSK (Frequency Shifted Keying) signal is carried from the ascending optoelectronic converter (4) up to the supervision module (5).

Lastly, the supervision module (5) performs alarm management functions and command executions through a data interface (9), and communicates with the supervision and control unit through the data interface (8).

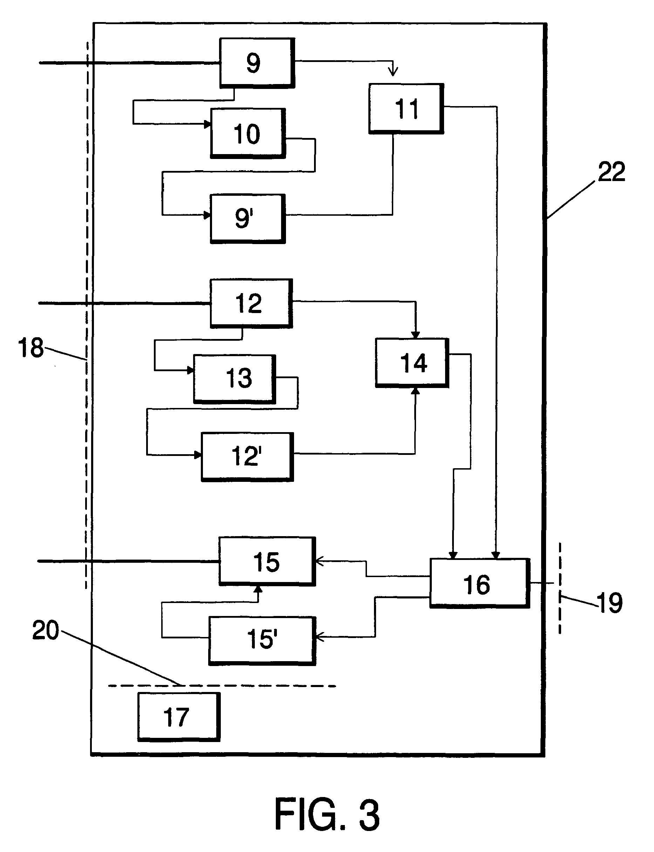

Finally, in Fig. 3, showing the block diagram of the antenna module, the optical signal containing information from the two GSM channels arrives through the optical interface (18) until the optoelectronic converter (9), the GSM frequency channel being amplified and carried up to a GSM combiner (11).

The channel displaced as for frequency is carried to a converter block (10), where it is displaced again up to the frequency of the corresponding GSM band, and said channel is later carried to an amplifier block (9') in order to afterwards attack the GSM combiner (11).

In a similar way, the optical signal containing information from the two DCS channels arrives at the optoelectronic converter (12), and the channel located at the DCS nominal frequency is amplified, and is carried to the DCS combiner (14).

The channel displaced as for frequency is carried to the converter (13), where it is displaced again up to the nominal frequency in DCS band, said channel being later carried to an amplifier block (12') to attack, later, the DCS combiner (14).

The two GSM channels coming from the GSM combiner (11), and the two DCS channels coming from the DCS combiner (14) are multiplexed in a duplexor (16), and they appear on the radioelectric interface (19).

At the receiving end, the GSM and/or DOS channels present on the interface (19) are separated at the duplexor (16), the channels GSM arriving at the electrooptical converter (15) where they modulate as for intensity a Fabry-Perot type laser of high power without cooling.

On the other hand, the DCS channels arrive at an amplifierblock (15'), and then they pass on to the electrooptical converter (15) to modulate as for intensity the same above mentioned transmitting laser.

On the optical interface (18) is present, therefore, an optical signal containing information from the GSM and/or DCS channels received.

Finally, the control plate (17) performs alarm reception and control functions, generating a type FSK signal or modulation by displacements in frequency modulating as for intensity the laser of the electrooptical converter (15) through the interface (20).

Lastly, it should be pointed out that the two channels in GSM band have 27.5 dBM power, while the two channels in DCS-1800 band have a minimum power each of 26.5 dBM.

It is not considered necessary to extend this description for any expert in the art to understand the scope of the invention and the advantages derived from it.

The materials, size, shape and arrangement of its components will be open to variation, provided that it does not imply any alteration to the essence of the invention.

The terms under which this specification has been described should be always taken in an ample and non-limiting sense.

## Claims

1. Module for radio transmission over optical fibre, **characterized in that** it is constituted starting from a BTS module or transceiver of base station (30), connected to an antenna module (50) by means of an assembly of three optical fibres, being qualified to radiate up to two channels in GSM band of a minimum power of 27.5 dBM each, and up to two channels in DCS-1800 band of a minimum power of 26.5 dBM each, incorporating a duplexor in dual band (16) within the antenna module (22), there being an only radioelectric interface (19) on the antenna module (50), hallowing it to operate with a single antenna in GSM-DCS-1800 dual band.

2. Module for radio transmission over optical fibre, according to claim 1, **characterized in** sending, for each of the two optical fibres of the descending link (61), an assembly of three carriers to different frequencies, being a carrier to a nominal frequency in GSM or DCS band; a second carrier being displaced up to a frequency which is lower (from 100 to 300 MHz), and a third reference carrier.

3. Module for radio transmission over optical fibre, according to any of the preceding claims, **characterized in** sending a frequence reference for each of the two optical fibres of the descending link, so that in the antenna module the original reference present in the BTS module by means of a hooking circuit, type PLL, is recovered.

4. Module for radio transmission over optical fibre, according to claim 1, **characterized in that** in the mobile to base ascending link (60), an assembly of up to two GSM carriers and up to two DCS-1800 carriers are situated, modulating, as for intensity, a Fabry-Perot type laser of high power, present on the antenna module (50).

5. Module for radio tranmission over optical fibres, according to claim 4, **characterized in that** in a single ascending optical fibre of the ascending link (60), up to two GSM carriers and up to two DCS-1800 carriers can be present, which extend until the BTS module (30).

## Patentansprüche

1. Modul für Funkübertragungen über Glasfaserleiter, **dadurch gekennzeichnet, dass** dieses beginnend von einem BTS Modul beziehungsweise einer Transceiver Basisstation (30) aus gebildet ist, welches mittels einer Anordnung von drei Glasfaserleitern mit einem Antennenmodul (50) verbunden ist, welches dafür geeignet ist, bis zu zwei Kanäle in einem GSM Band mit einer Mindestleistung von jeweils 27,5 dBM und bis zu zwei Kanäle in einem DCS-1800 Band mit einer Mindestleistung von jeweils 26,5 dBM auszustrahlen, wobei ein Duplexer in Dualband (16) innerhalb des Antennenmoduls (22) eingeschlossen ist, wobei eine einzige radioelektrische Schnittstelle (19) auf dem Antennenmodul (50) besteht, welche es erlaubt, dass dieses mit einer einzigen Antenne in GSM-DCS-1800 Dualband betrieben wird.

2. Modul für Funkübertragungen über Glasfaserleiter nach Anspruch 1, **dadurch gekennzeichnet, dass** für jeden der beiden Glasfaserleiter der absteigenden Verbindung (61) eine Gruppe von drei Trägern an unterschiedliche Frequenzen gesendet wird, wobei ein Träger an eine Nennfrequenz in GSM oder DCS Band geht; ein zweiter Träger bis zu einer Frequenz verschoben wird, welche niedriger ist (von 100 bis 300 MHz), sowie ein dritter Referenzträger.

3. Modul für Funkübertragungen über Glasfaserleiter nach irgendeinem der vorherigen Ansprüche, **dadurch gekennzeichnet, dass** für jeden der beiden Glasfaserleiter der absteigenden Verbindung eine Referenzfrequenz gesendet wird, so dass in dem Antennenmodul die ursprüngliche, in dem BTS Modul vorliegende Referenz mittels eines Einhänge-Schaltkreises der Art eines PLL-Schaltkreises wiedererlangt wird.

4. Modul für Funkübertragungen über Glasfaserleiter nach Anspruch 1, **dadurch gekennzeichnet, dass** sich in der Handy-an-Basis ansteigenden Verbindung (60) eine Gruppe von bis zu zwei GSM Trägern und bis zu zwei DCS-1800 Trägern befindet, welche in Bezug auf die Stärke einen Hochleistungs-Laser von der Art eines Fabry-Perot-Lasers modulieren, welcher in dem Antennenmodul (50) vorhanden ist.

5. Modul für Funkübertragungen über Glasfaserleiter nach Anspruch 4, **dadurch gekennzeichnet, dass** in einem einzigen ansteigenden Glasfaserleiter der ansteigenden Verbindung (60) bis zu zwei GSM Träger und bis zu zwei DCS-1800 Träger vorliegen können, die sich bis zu dem BTS Modul (30) erstrecken.

## Revendications

1. Module pour transmission radio sur fibre optique, **caractérisé en ce qu'**il est constitué en partant d'un module BTS ou d'un émetteur-récepteur de station de base (30), connecté à un module d'antenne (50) au moyen d'un assemblage de trois fibres optiques, remplissant les conditions requises pour émettre jusqu'à deux canaux en bande GSM d'une puissance minimale de 27,5 dBm chacun, et jusqu'à deux canaux en bande DCS-1800 d'une puissance minimale de 26,5 dBm chacun, comprenant un duplexeur en bi-bande (16) à l'intérieur du module d'antenne (22), étant présente une unique interface radioélectrique (19) sur le module d'antenne (50), lui permettant de fonctionner avec une unique antenne en bi-bande GSM-DCS-1800.

2. Module pour transmission radio sur fibre optique, selon la revendication 1, **caractérisé en ce qu'**il envoie, pour chacune des deux fibres optiques de la liaison descendante (61), un assemblage de trois porteuses à différentes fréquences, une porteuse étant à une fréquence nominale en bande GSM ou DCS ; une seconde porteuse étant déplacée jusqu'à une fréquence qui est plus basse (de 100 à 300 MHz), et une troisième porteuse de référence.

3. Module pour transmission radio sur fibre optique, selon n'importe laquelle des revendications précédentes, **caractérisé en ce qu'**il envoie, une référence de fréquence pour chacune des deux fibres optiques de la liaison descendante, pour que dans le module d'antenne la référence d'origine présente dans le module BTS au moyen d'un circuit en boucle, de type PLL, soit rétablie.

4. Module pour transmission radio sur fibre optique, selon la revendication 1, **caractérisé en ce que** dans la liaison ascendante mobile à base (60), un assemblage allant jusqu'à deux porteuses GSM et jusqu'à deux porteuses DCS-1800 sont situées, modulant, pour ce qui est de l'intensité, un laser de type Fabry-Pérot de forte puissance, présent sur le module d'antenne (50).

5. Module pour transmission radio sur fibres optiques, selon la revendication 4, **caractérisé en ce que** dans une unique fibre optique ascendante de la liaison ascendante (60), jusqu'à deux porteuses GSM et jusqu'à deux porteuses DCS-1800 peuvent être présentes, lesquelles s'étendent jusqu'au module BTS (30).
